(19) Europäisches Patentamt
European Patent Office
Office européen des brevets

(11) EP 4 040 208 A1

(12) EUROPEAN PATENT APPLICATION
published in accordance with Art. 153(4) EPC

(43) Date of publication:
10.08.2022 Bulletin 2022/32

(51) International Patent Classification (IPC):
G02B 13/00 (2006.01)        G02B 13/14 (2006.01)
G02B 13/18 (2006.01)

(21) Application number: 19954137.6

(22) Date of filing: 27.11.2019

(52) Cooperative Patent Classification (CPC):
G02B 13/00; G02B 13/14; G02B 13/18

(86) International application number:
PCT/CN2019/121296

(87) International publication number:
WO 2021/102744 (03.06.2021 Gazette 2021/22)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: TIANJIN OFILM OPTO ELECTRONICS
CO., LTD
Tianjin, 300385 (CN)

(72) Inventors:
• LE, Yuming
Tianjin 300385 (CN)
• LAN, Binli
Tianjin 300385 (CN)
• ZHOU, Rui
Tianjin 300385 (CN)

(74) Representative: Inchingalo, Simona
Bugnion S.p.A.
Viale Lancetti, 17
20158 Milano (IT)

(54) **CAMERA LENS ASSEMBLY, IMAGE CAPTURE MODULE, AND ELECTRONIC DEVICE**

(57) Provided are a camera lens assembly, an image capture module, and an electronic device. The camera lens assembly is used for light imaging comprising a visible light wave band and an infrared wave band; the camera lens assembly comprises the following, in order from the object side to the image side along the optical axis: a first lens (L1) having a negative refractive power, its object side face being a convex surface; a second lens (L2) having a positive refractive power; a third lens (L3) having a negative refractive power; a fourth lens (L4) having a refractive power; a fifth lens (L5) having a refractive power, its object side face being a convex surface and its image side face being a convex surface; a sixth lens (L6) having a negative refractive power, its image side being a concave surface; a stop (ST0) is arranged between the object side of the camera lens assembly and the sixth lens (L6); the camera lens assembly satisfies the following relationship: 0<|ns3-ns1|x100<30; ns3 represents the s optical refractive index of the third lens (L3), and ns1 represents the s optical refractive index of the first lens (L1). The camera lens assembly can obtain high-resolution images even in conditions of low light, satisfying the multi-scenario image capture requirements of a vehicle-mounted assistance system.

FIG. 1

**Description**

**TECHNICAL FIELD**

The present application relates to the technical field of optical imaging, in particular to a camera lens group, an image acquisition module, and an electronic device.

**BACKGROUND**

With the development of science and technology, the in-vehicle driving functions of the advanced driving assistant system (ADAS) and the driver monitor system (DMS) are gradually mature, and real-time monitoring of the driver's status is required. For example, according to the driver's eye state, eye-closing times, eye-closing range, yawning and other related information are inferred to determine whether the driver is driving fatigued, so as to issue an early warning when the driver is driving fatigued and improve driving safety.

However, the imaging resolution of the lens of the conventional in-vehicle assistance system is not high, and it is difficult to recognize the driver's facial features and motions in complex driving environments (such as tunnels or underground parking lots) to accurately feed the driver's status information back to the in-vehicle system, such that the driving safety cannot be guaranteed.

**SUMMARY**

According to various embodiments of the present application, a camera lens group is provided.

A camera lens group is configured to image light including a visible light band and an infrared band, and includes, successively in order from an object side to an image side along an optical axis:

a first lens having a negative refractive power, an object side surface of the first lens being convex;
a second lens having a positive refractive power;
a third lens having a negative refractive power;
a fourth lens having a refractive power;
a fifth lens having a refractive power, an object side surface and an image side surface of the fifth lens being convex;
a sixth lens having a negative refractive power, an image side surface of the sixth lens being concave; and
a stop arranged between the object side of the camera lens group and the sixth lens;

The camera lens group satisfies the following condition:

$$0 < \left| ns3 - ns1 \right| \times 100 < 30;$$

wherein *ns3* indicates a s-light refractive index of the third lens, *ns1* indicates a s-light refractive index of the first lens.

An image acquisition module includes: the camera lens group as above; and a photosensitive element arranged on the image side of the camera lens group.

An electronic device includes: a housing; and the image acquisition module as above. The image acquisition module is mounted on the housing.

Details of one or more embodiments of the present application will be given in the following description and attached drawings. Other features, objects and advantages of the present application will become apparent from the description, drawings, and claims.

**BRIEF DESCRIPTION OF THE DRAWINGS**

In order to better describe and illustrate the embodiments or examples of the inventions disclosed herein, the reference may be made to one or more drawings. The additional details or examples used to describe the drawings should not be considered to limit the scope of any of the disclosed inventions, the presently described embodiments or examples, and the best mode presently understood of these inventions.

FIG. 1 is a schematic view of a camera lens group of Example 1 of the present application.
FIGS. 2A to 2C are a longitudinal spherical aberration graph, an astigmatic graph, and a distortion graph of the camera lens group of Example 1, respectively.

FIG. 3 is a schematic view of a camera lens group of Example 2 of the present application.

FIGS. 4A to 4C are a longitudinal spherical aberration graph, an astigmatic graph, and a distortion graph of the camera lens group of Example 2, respectively.

FIG. 5 is a schematic view of a camera lens group of Example 3 of the present application.

FIGS. 6A to 6C are a longitudinal spherical aberration graph, an astigmatic graph, and a distortion graph of the camera lens group of Example 3, respectively.

## DETAILED DESCRIPTION OF THE EMBODIMENTS

In order to make the objectives, technical solutions and advantages of the present application clearer, the embodiments of the present application will be further described in detail below with reference to the accompanying drawings. It should be understood that the specific embodiments described herein are only used to illustrate the present application, but not to limit the present application.

It should be noted that when an element is referred to as being "provided on" another element, the element can be directly on another element or an intermediate element may also be present. When an element is referred to as being "connected" to another element, the element can be directly connected to another element or an intermediate element may also be present. The terms "vertical", "horizontal", "left", "right" and similar expressions used herein are for the purpose of illustration only and do not represent the only embodiment.

It should be noted that in this specification, the expressions such as first, second, third etc. are only used to distinguish one feature from another feature and do not imply any limitation on the features. Accordingly, a first lens discussed below may also be referred to as a second lens or a third lens without departing from the teachings of the present application.

Herein, if a surface of a lens is convex and a position of the convex surface is not defined, it means that the surface of the lens is convex at least in a paraxial region. If a surface of a lens is concave and a position of the concave surface is not defined, it means that the surface of the lens is concave at least in the paraxial region. The paraxial region here refers to a region near an optical axis. The surface of each lens closest to an object is called an object side surface, and the surface of each lens closest to an imaging plane is called an image side surface.

For ease of illustration, the spherical or aspherical shapes shown in the drawings are shown by way of example. That is, the shape of the spherical or aspherical surface is not limited to the shape of the spherical or aspherical surface shown in the drawings. The drawings are examples only and are not drawn strictly to scale.

Unless otherwise defined, all technical and scientific terms used herein have the same meaning as commonly understood by one of ordinary skill in the technical field to which this application belongs. The terms used herein in the specification of the present application are for the purpose of describing specific embodiments only and are not intended to limit the present application. As used herein, the term "and/or" includes any and all combinations of one or more of the associated listed items.

In a conventional advanced driving assistant system (ADAS) and driver monitor system (DMS), it is necessary to use the lens of the in-vehicle assistance system to capture images of the driver, passengers, and interior conditions so that the system can use the images to make accurate analysis and determination to ensure driving safety and reduce the occurrence of traffic accidents. However, although the lens of the conventional in-vehicle assistance system can be miniaturized and lightweight, the imaging resolution thereof is not high, so that it is difficult to accurately feed the driver' states back, the passengers' states, and the interior conditions of the vehicle to the system, which cannot meet the application requirements of the increasingly mature ADAS and DMS.

The deficiencies existing in the above schemes are the results obtained by the inventor after practice and careful research. Therefore, the discovery process of the above problems and the solutions proposed in the following embodiments of the present application for the above problems should be considered as contributions made by the inventor to this application in the course of applying for this application.

The features, principles, and other aspects of the present application are described in detail below.

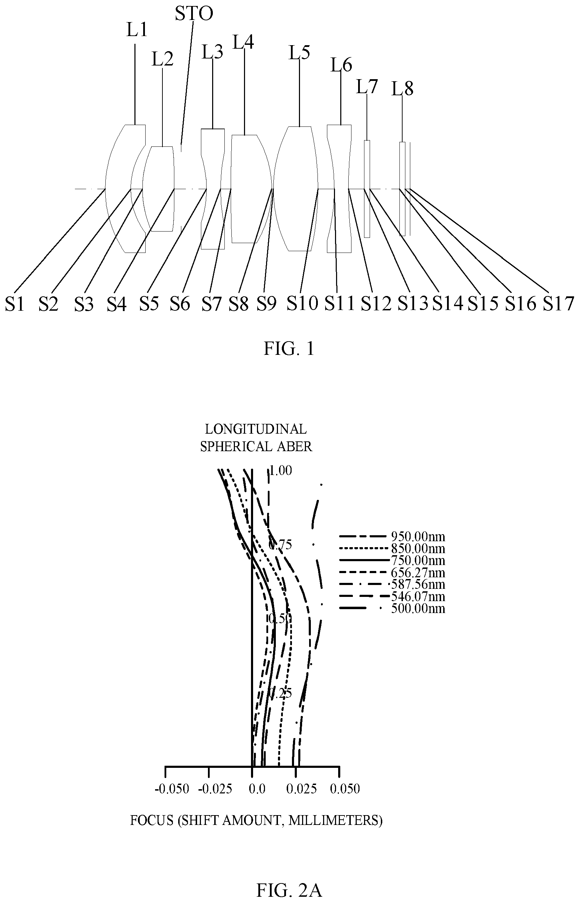

Referring to FIGS. 1, 3 and 5, an embodiment of the present application provides a camera lens group that not only meets the application requirements of miniaturization and lightweight, but is also applicable for visible light and infrared light imaging, and has high-pixel imaging capability. The camera lens group includes six lenses having refractive powers, which are a first lens, a second lens, a third lens, a fourth lens, a fifth lens, and a sixth lens, and an imaging plane located at an object side of the sixth lens 160. The six lenses are arranged successively in order from the object side to an image side along an optical axis.

The first lens has a negative refractive power, such that it is beneficial to focus the incident light on the imaging plane of the camera lens group, so as to realize stable imaging. An object side surface of the first lens is convex, which is beneficial to adjust the shape and refractive power of the first lens, so as to balance the curvature configuration of the two surfaces of the first lens.

The second lens has a positive refractive power, such that it is beneficial to correct part of the aberrations generated by the first lens, so that the system has a higher resolution.

The third lens has a negative refractive power, such that it is beneficial to prevent overcorrection of the second lens, and it can further focus the incident light on the imaging plane of the camera lens group.

The fourth lens has a refractive power, and an object side surface of the fourth lens is convex, which is beneficial to reduce the distortion of the off-axis field of view, avoiding imaging distortion, and also helping to correct aberrations.

The fifth lens has a refractive power, and an object side surface and an image side surface of the fifth lens are convex, such that it is beneficial to further correct the aberrations. In addition, the fifth lens can cooperate with the sixth lens to reduce the incident angle of the chief ray in the off-axis field of view, improving photosensitive capability of a photosensitive element.

The sixth lens has a negative refractive power, and an image side surface of the sixth lens is concave, such that the back focal length of the camera lens group can be effectively shortened, and the miniaturization of the camera lens group can be achieved.

A stop is further arranged in the camera lens group. The stop includes an aperture stop and a visual field stop, and can be arranged between the object side of the camera lens group and the first lens, or between the first lens and the sixth lens. Preferably, the stop is the aperture stop, and is arranged between the second lens and the third lens, so as to effectively suppress the excessive increase of the incident angle of the chief ray in the off-axis field of view, such that the camera lens group can better cooperate with a photosensitive element of the conventional specification.

Specifically, the camera lens group satisfies the following condition: $0<|ns3-ns1|\times100<30$; where $ns3$ indicates the s-light refractive index of the third lens, $ns1$ indicates the s-light refractive index of the first lens, and the s-light has a wavelength of 852.11 nm. The value of $|ns3 - ns1|$ can be 0.05, 0.10, 0.15, 0.20, 0.25, 0.28 or 0.29. When the above condition is satisfied, it is beneficial to further reduce aberrations. In addition, it can not only ensure that the camera lens group can obtain clear images in the visible light band range (i.e., daytime), but also can improve the imaging quality of the camera lens group in the infrared band range (i.e., nighttime).

When the above-mentioned camera lens group is used for imaging, the light emitted or reflected by a subject enters the camera lens group from the direction of the object side, and is transmitted through the first lens, the second lens, the third lens, the fourth lens, the fifth lens and the sixth lens in sequence, and is finally converged on the imaging plane.

By reasonably configuring the refractive powers, the surface shapes and the effective focal lengths of each of the lenses, the above-mentioned camera lens group can ensure the miniaturization of the camera lens group while enhancing the imaging resolution capability and the capturing capability in dark light of the camera lens group. In addition, the camera lens group of the present application can maintain good imaging quality in a wide wavelength band range, and can be applicable to light imaging in the visible light band and in the infrared band, so as to meet the operating requirements of the in-vehicle monitoring device in day and night.

In an exemplary embodiment, the object side surface and/or the image side surface of at least one of the second lens, the third lens, the fourth lens, the fifth lens, and the sixth lens is arranged to be aspherical, such that it can improve the flexibility when designing the lenses, effectively correct the aberrations, and improve the imaging resolution of the camera lens group. In other embodiments, the object side surfaces and the image side surfaces of each lens of the camera lens group may also be spherical. It should be noted that the above-mentioned embodiments are only examples of some embodiments of the present application. In some embodiments, the surfaces of each lens in the camera lens group may be any combination of the aspherical surface or the spherical surface.

In an exemplary embodiment, a filter film is arranged on the object side surface or the image side surface of one of the first lens, the second lens, the third lens, the fourth lens, the fifth lens and the sixth lens. Alternatively, a filter is arranged between the sixth lens and the imaging plane of the camera lens group. By arranging the filter film on one surface of the lens of the camera lens group or arranging the filter in the camera lens group, the spectral range of the light incident on the imaging plane of the camera lens group can be selected to cut off the wavelength bands other than the visible light band and the near-infrared band, such that it can ensures that the camera lens group can capture clear and vivid images during the day and night.

In an exemplary embodiment, the camera lens group satisfies the following condition: $-5<f1/f<0$; where $f1$ is an effective focal length of the first lens, and f is an effective focal length of the camera lens group. The value of $f1/f$ can be -1.0, -1.5, -2.0, -2.5, -3.0, -3.5, -4.0, or -4.5. When the above condition is satisfied, the first lens can be arranged as a negative lens, so as to provide the negative refractive power for the camera lens group, which is beneficial to focus the incident light on the imaging plane of the camera lens group and realizes stable imaging. In addition, when the above condition is satisfied, the effective focal length of the first lens can also be kept from being too small, which is beneficial to reduce the sensitivity of the camera lens group, and the effective focal length of the camera lens group can also be kept from being too large, which is beneficial to realize the miniaturization of the camera lens group.

In an exemplary embodiment, the camera lens group satisfies the following condition: $0<f4/f<4$: where $f4$ is an effective focal length of the fourth lens, and $f$ is an effective focal length of the camera lens group. The value of $f4/f$ can be 0.3, 0.4, 0.5, 0.6, 0.7, 0.8, 0.9, 1.0, 2.0 or 3.0. When the above condition is satisfied, the fourth lens can be arranged as a positive lens, so as to provide the positive refractive power for the camera lens group, which is beneficial to correct the aberration of the camera lens group and improve the imaging quality of the camera lens group.

In an exemplary embodiment, the camera lens group satisfies the following condition: *-3<f6/f<0*; where *f6* is an effective focal length of the sixth lens, and *f* is an effective focal length of the camera lens group. The value of *f6/f* can be -0.5, -0.6, -0.7, - 0.8, -0.9, -1.0, -1.5, -2.0, or -2.5. When the above condition is satisfied, the sixth lens is arranged as a negative lens, so as to provide the negative refractive power for the camera lens group, which is beneficial to correct the aberration of the camera lens group and improve the imaging quality of the camera lens group.

In an exemplary embodiment, the camera lens group satisfies the following condition: *0.1<ImgH\*2/TTL<0.8;* where *ImgH* is half of a diagonal length of an effective pixel area on the imaging plane of the camera lens group, and *TTL* is a distance on the optical axis from the object side surface of the first lens to the imaging plane of the camera lens group. When the above condition is satisfied, the resolution of the camera lens group can be improved to ensure the imaging quality of the camera lens group, and the overall length of the camera lens group can be effectively shortened to achieve miniaturization.

In an exemplary embodiment, the camera lens group satisfies the following condition: *0.5< ΣCT/TTL<0.85*; where *ΣCT* is a sum of the thicknesses of the first to sixth lenses on the optical axis, and *TTL* is a distance on the optical axis from the object side surface of the first lens to the imaging plane of the camera lens group. The value of *ΣCT/TTL* can be 0.52, 0.54, 0.56, 0.58, 0.60, 0.65, 0.70, 0.75 or 0.80. When the above condition is satisfied, it is beneficial to further control and adjust the overall length of the camera lens group, thereby realizing the miniaturization of the camera lens group.

In an exemplary embodiment, the camera lens group satisfies the following condition: *Ed45/d45<20*; where *Ed45* is a distance from a portion of the image side surface of the fourth lens at the maximum effective diameter to a portion of the object side surface of the fifth lens at the maximum effective diameter in a direction parallel to the optical axis; *d45* is a distance on the optical axis from the image side surface of the fourth lens to the object side surface of the fifth lens. The value of *Ed45/d45* can be 4, 5, 6, 7, 9, 10, 12, 14, 16 or 18.

When the above condition is satisfied, a gap between the fourth lens and the fifth lens at the maximum effective diameter can be prevented from being too large, and the collision between the fourth lens and the fifth lens during the manufacture and assembly process can be avoided, thereby improving the stability of manufacture and assembly, and improving manufacture yield. For example, when the image side surface of the fourth lens and the object side surface of the fifth lens are convex, and the above two convex surfaces are opposite to each other, the larger the curvature radii of the two lens surfaces, the larger the *Ed45*. In this case, if the smaller the *d45*, the more likely the fourth lens and the fifth lens collide during the assembling process, reducing the manufacture yield.

In an exemplary embodiment, the camera lens group satisfies the following relational condition: $|dn/dt|_3 < 10.3 \times 10^{-6}$ /°C , where $|dn/dt|_3$ is the magnitude of the temperature coefficient of refractive index of the third lens in the temperature range of - 40°C to 100°C, which reflects the change in the refractive index of the lens affected by temperature. The value of $|dn/dt|_3$ can be 1E-6, 2E-6, 3E-6, 4E-6, 5E-6, 6E-6, 7E-6, 8E-6, 9E-6 or 10E-6. When the above condition is satisfied, it is beneficial to reduce the sensitivity of the camera lens group to temperature, thereby ensuring that the camera lens group can still maintain good imaging quality in a wide temperature range.

In an exemplary embodiment, in the camera lens group, at least one lens satisfies the following condition: $|dn/dt|_i \times f_i < 0$ ; where, *i* is the serial number of the lens in the camera lens group; $|dn/dt|_i$ is the magnitude of the temperature coefficient of refractive index of the $i^{th}$ lens in the camera lens group in the temperature range of -40°C to 100°C; and $f_i$, is an effective focal length of the $i^{th}$ lens in the camera lens group.

The change of temperature will cause the refractive index of the lens to change. When the temperature coefficient of refractive index is positive, if the temperature increases, the refractive index will increase, and the focal length of the lens will be shortened. When the temperature coefficient of refractive index is negative, if the temperature increases, the refractive index becomes smaller, and the focal length of the lens becomes longer. The moving direction of the focal point of the camera lens group is also related to the positive or negative refractive power of each of the lenses. Therefore, the product of the temperature coefficient of refractive index of at least one lens in the camera lens group in the temperature range of -40°C to 100°C and the effective focal length of this lens is less than zero, which can correct the movement of the focal point of the lens caused by temperature changes, thereby reducing the sensitivity of the camera lens group to temperature and ensuring that the camera lens group can still maintain good imaging quality in a wide temperature range.

In an exemplary embodiment, the camera lens group satisfies the following conditions: *nd3>1.9, nd6>1.9*; *vd3<30, vd6<30*; where *nd3* and *vd3* are the refractive index under d light and the Abbe number under d light of the third lens, respectively; *nd6* and *vd6* are the refractive index under d light and the Abbe number under d light of the sixth lens, respectively, and the wavelength of d light is 587.56 nm. By controlling the refractive index under d light and the Abbe number under d light of the third lens, and the refractive index under d light and the Abbe number under d light of the sixth lens to satisfy the above conditions, it is beneficial to correct the off-axis chromatic aberration and magnification chromatic aberration of the camera lens group, and improve the imaging quality of the camera lens group when applied in the visible light band.

In an exemplary embodiment, the camera lens group satisfies the following condition: $f/EPD \leq 2.0$; where $f$ is the effective focal length of the camera lens group, and $EPD$ is an entrance pupil diameter of the camera lens group. The value of $f/EPD$ can be 1.55, 1.60, 1.65, 1.70, 1.75, 1.80, 1.85, 1.90 or 1.95. When the above condition is satisfied, it is beneficial to increase the amount of light entering the camera lens group, improve the brightness and clarity of the image. Moreover, it can also enhance the dark light adaptability of the camera lens group, which can meet the capturing requirements in various dark light scenes such as interiors, tunnels and underground parking lots.

In an exemplary embodiment, the camera lens group satisfies the following condition: $1<FOV/CRA<10$; where $FOV$ is the angle of field of view of the camera lens group, and $CRA$ is an incident angle of the chief ray to the camera lens group. When the above condition is satisfied, sufficient imaging angle of field of view can be provided for the camera lens group, so as to meet the capturing requirements of the lenses of the device such as mobile phones, cameras, and in-vehicle devices, monitoring devices, medical devices. Moreover, the incident angles of the chief rays in the off-axis field of view can also effectively suppressed from being increased, to more accurately cooperate with the photosensitive element with ultra-high pixels, and to improve the photosensitive performance of the photosensitive element.

In an exemplary embodiment, each lens in the camera lens group may be made of glass or plastic. The lens made of plastic can reduce the weight and the manufacture cost of the camera lens group, and the lens made of glass can cause the camera lens group to have good temperature resistance and excellent optical properties. It should be noted that the lenses in the camera lens group can be made of glass or plastic, or any combination of glass and plastic.

In an exemplary embodiment, the stop may be the aperture stop. The aperture stop may be located on the surface of any one of the first to sixth lenses (e.g., the object side surface and the image side surface), forming an interaction relationship with the lens. For example, a light-blocking coating is applied on the surface of the lens to form the aperture stop on this surface; or a clamping member is used to fixedly clamp the surface of the lens, and thus the clamping member located on this surface can limit the width of the imaging light beam at the object point on the optical axis, thereby forming the aperture stop on this surface.

In an exemplary embodiment, the camera lens group further includes a protective glass for protecting the photosensitive element. The photosensitive element is arranged on the imaging plane of the camera lens group. Further, the imaging plane may be the photosensitive surface of the photosensitive element.

The camera lens group of the above-mentioned embodiments of the present application may employ multiple lenses, for example, the above-mentioned six lenses. By reasonably configuring the focal lengths, the refractive powers, the surface shapes, the thicknesses of the lenses, and the on-axis distance between the lenses, etc., the overall length of the above-mentioned camera lens group can be ensured to be small and have a high imaging resolution, as well as a large aperture (FNO can be 1.65), so as to better meet the application requirements of lightweight electronic devices such as lenses for in-vehicle assistance systems, mobile phones, and tablets. It can be understood that, although six lenses are used as an example for description in the embodiments, the camera lens group is not limited to include six lenses, and the camera lens group may also include other numbers of lenses if necessary.

Specific examples of the camera lens group applicable to the above-described embodiments are further described below with reference to the accompanying drawings.

Example 1

A camera lens group according to Example 1 of the present application will be described below with reference to FIGS. 1 to 2C.

FIG. 1 is a schematic view of the camera lens group according to Example 1 of the present application. As shown in FIG. 1, the camera lens group includes a first lens L1, a second lens L2, a third lens L3, a fourth lens L4, a fifth lens L5, a sixth lens L6, and an imaging plane S17 successively in order from an object side to an image side along an optical axis.

The first lens L1 has a negative refractive power, and an object side surface S1 and an image side surface S2 of the first lens L1 are both spherical. The object side surface S1 is convex, and the image side surface S2 is concave.

The second lens L2 has a positive refractive power, and an object side surface S3 and an image side surface S4 of the second lens L2 are both aspherical. The object side surface S3 is convex, and the image side surface S4 is convex.

The third lens L3 has a negative refractive power, and an object side surface S5 and an image side surface S6 of the third lens L3 are both spherical. The object side surface S5 is concave, and the image side surface S6 is concave.

The fourth lens L4 has a positive refractive power, and an object side surface S7 and an image side surface S8 of the fourth lens L4 are both spherical. The object side surface S7 is convex, and the image side surface S8 is convex.

The fifth lens L5 has a positive refractive power, and an object side surface S9 and an image side surface S10 of the fifth lens L5 are spherical. The object side surface S9 is convex, and the image side surface S10 is convex.

The sixth lens L6 has a negative refractive power, and an object side surface S11 and an image side surface S12 of the sixth lens L6 are both spherical. The object side surface S11 is concave, and the image side surface S12 is concave.

Both the object side surface S3 and the image side surface S4 of the second lens L2 are arranged to be aspherical, which is beneficial to solve the problem of distortion of the field of view, and also enables the lens to achieve an excellent optical imaging effect when the lens is small, thin and flat. Furthermore, the camera lens group has a miniaturization characteristic.

The first lens L1 to the sixth lens L6 are all made of glass. The use of the lenses made of glass can cause the camera lens group to have a good temperature resistance characteristic and excellent optical performance.

A stop STO is further arranged between the second lens L2 and the third lens L3, so as to further improve the imaging quality of the camera lens group.

The camera lens group further includes a filter L7 having an object side surface S13 and an image side surface S14, and a protective glass L8 having an object side surface S15 and an image side surface S16. The filter L7 and the protective glass L8 are sequentially arranged between the sixth lens L6 and the imaging plane S17 along the optical axis from the object side to the image side. The light from an object OBJ is sequentially transmitted through the respective surfaces S1 to S16 and is finally imaged on the imaging plane S17. Further, the filter L7 is used to filter out the light in the mid and far-infrared band in the external light incident to the camera lens group, so as to avoid imaging distortion. Specifically, the filter L7 is made of glass. The filter L7 and the photosensitive glass L8 may be a part of the camera lens group and be assembled with the lenses, or may be mounted when the camera lens group and the photosensitive element are assembled.

Table 1 shows the surface type, curvature radius, thickness, material, refractive index, Abbe number (i.e., dispersion coefficient), and effective focal length of each lens of the camera lens group according to Example 1. The unit of the curvature radius, thickness, effective focal length of each lens is millimeter (mm). In addition, taking the first lens L1 as an example, in the "thickness" parameter column of the first lens L1, the first value is a thickness of this lens on the optical axis, and the second value is a distance from the image side surface of this lens to the object side surface of the latter lens in the direction towards the image side on the optical axis. The reference wavelength in Table 1 is 656 nm.

Table 1

| Example 1 | | | | | | | | |
|---|---|---|---|---|---|---|---|---|
| f=10.50mm; FNO=1.65; FOV=36.0°; TTL=21.50mm | | | | | | | | |
| Surface Number | Surface Name | Surface Shape | Y radius | Thickness | Material | Refractive index | Abbe number | Focal Length |
| OBJ | Object Plane | Spherical | Infinite | Infinite | | | | |
| S1 | First Lens | Spherical | 8.00 | 1.80 | Glass | 1.773 | 49.6 | -26.84 |
| S2 | | Spherical | 5.20 | 0.82 | | | | |
| S3 | Second Lens | Aspherical | 6.84 | 2.24 | Glass | 1.808 | 40.5 | 8.05 |
| S4 | | Aspherical | -100.00 | 0.50 | | | | |
| STO | Stop | Spherical | Infinite | 1.79 | | | | |
| S5 | Third Lens | Spherical | -7.78 | 1.00 | Glass | 2.003 | 19.3 | -4.80 |
| S6 | | Spherical | 12.89 | 0.72 | | | | |
| S7 | Fourth Lens | Spherical | 100.00 | 2.89 | Glass | 1.804 | 46.5 | 8.61 |
| S8 | | Spherical | -7.29 | 0.12 | | | | |
| S9 | Fifth Lens | Spherical | 9.58 | 3.12 | Glass | 1.911 | 35.3 | 7.51 |
| S10 | | Spherical | -19.60 | 1.15 | | | | |
| S11 | Sixth Lens | Spherical | -13.42 | 1.00 | Glass | 1.923 | 20.9 | -10.07 |
| S12 | | Spherical | 30.00 | 1.10 | | | | |
| S13 | Filter | Spherical | Infinite | 0.40 | Glass | 1.517 | 64.2 | |
| S14 | | Spherical | Infinite | 2.10 | | | | |
| S15 | | Spherical | Infinite | 0.40 | Glass | 1.517 | 64.2 | |

(continued)

| Example 1 | | | | | | | | |
|---|---|---|---|---|---|---|---|---|
| f=10.50mm; FNO=1.65; FOV=36.0°; TTL=21.50mm | | | | | | | | |
| Surface Number | Surface Name | Surface Shape | Y radius | Thickness | Material | Refractive index | Abbe number | Focal Length |
| S16 | Protective Glass | Spherical | Infinite | 0.35 | | | | |
| S17 | Imaging Plane | Spherical | Infinite | | | | | |

The aspherical surface shape in each lens is defined by the following Expression:

$$x = \frac{ch^2}{1+\sqrt{1-(k+1)c^2h^2}} + \Sigma A_i h^i \qquad (1)$$

where, is a vector height of the distance from the aspherical surface at the height of $h$ along the direction of the optical axis, to the vertex of the aspherical surface; c is the paraxial curvature of the aspherical surface, $c=1/R$ (that is, the paraxial curvature c is the reciprocal of the curvature radius R in Table 1); $k$ is the conic coefficient; $A_i$ is the ith order coefficient of the aspherical surface. Table 2 below shows the higher order coefficients A4, A6, A8, A10, A12, A14, A16, A18 and A20 that can be used for the aspherical surfaces S3-S4 of the lens in Example 1.

Table 2

| Example 1 | | |
|---|---|---|
| Aspherical Coefficient | | |
| Surface Number | S3 | S4 |
| K | -3.23E-01 | 0.00E+00 |
| A4 | -1.78E-04 | -5.86E-04 |
| A6 | -8.52E-06 | -1.65E-05 |
| A8 | -2.00E-10 | -2.85E-06 |
| A10 | -2.65E-07 | -8.31E-08 |
| A12 | 0.00E+00 | 0.00E+00 |
| A14 | 0.00E+00 | 0.00E+00 |
| A16 | 0.00E+00 | 0.00E+00 |
| A18 | 0.00E+00 | 0.00E+00 |
| A20 | 0.00E+00 | 0.00E+00 |

The half of the diagonal length ImgH of the effective pixel area on the imaging plane S17 of the camera lens group according to this example is 3.31 mm. Therefore, in combination with the data in Table 1 and Table 2, it can be seen that the camera lens group in Example 1 satisfies:

$|ns3-ns1|*100=20.5$, where $ns3$ indicates the s-light refractive index of the third lens L3, and $ns1$ indicates the s-light refractive index of the first lens L1;
$f1/f=-2.56$, where f1 is the effective focal length of the first lens L1, and $f$ is the effective focal length of the camera lens group;
$f4/f=0.82$, where f4 is the effective focal length of the fourth lens L4, and $f$ is the effective focal length of the camera lens group;

$f6/f=-0.96$, where $f6$ is the effective focal length of the sixth lens L6, and $f$ is the effective focal length of the camera lens group;

$ImgH*2/TTL=0.31$, where $ImgH$ is half of the diagonal length of the effective pixel area on the imaging plane S17 of the camera lens group, and $TTL$ is the distance from the object side surface S1 of the first lens L1 to the imaging plane S17 of the camera lens group on the optical axis;

$\Sigma CT/TTL=0.56$, where $\Sigma CT$ is the sum of the thicknesses of the first lens L1 to the sixth lens L6 on the optical axis, and $TTL$ is the distance from the object side surface S1 of the first lens L1 to the imaging plane S17 of the camera lens group on the optical axis;

$Ed45/d45=18.75$, where $Ed45$ is the distance from a portion of the image side surface S8 of the fourth lens L4 at the maximum effective diameter to a portion of the object side surface S9 of the fifth lens L5 at the maximum effective diameter in a direction parallel to the optical axis; $d45$ is the distance on the optical axis from the image side surface S8 of the fourth lens L4 to the object side surface S9 of the fifth lens L5;

$|dn/dt|_3 = 7.2\times10^{-6}$ /°C, where $|dn/dt|_3$ is the magnitude of the temperature coefficient of refractive index of the third lens L3 in the temperature range of -40°C to 100°C;

$|dn/dt|_i\times f_i<0$, where $i$ is the serial number of the lens in the camera lens group; $|dn/dt|_i$ is the magnitude of the temperature coefficient of refractive index of the $i^{th}$ lens in the camera lens group in the temperature range of -40°C to 100°C; and $f_i$ is an effective focal length of the $i^{th}$ lens in the camera lens group, and in particular:

$$\left|dn/dt\right|_1 \times f_1 = -131.5\times10^{-6} mm/°C, \quad \left|dn/dt\right|_2 \times f_2 = 68.44\times10^{-6} mm/°C,$$

$$\left|dn/dt\right|_3 \times f_3 = -34.53\times10^{-6} mm/°C, \quad \left|dn/dt\right|_4 \times f_4 = 36.147\times10^{-6} mm/°C,$$

$$\left|dn/dt\right|_5 \times f_5 = 39.785\times10^{-6} mm/°C, \quad \left|dn/dt\right|_6 \times f_6 = -18.129\times10^{-6} mm/°C;$$

$nd3=2.003$, $vd3=19.3$, $nd6=1.923$, $vd6=20.9$, where $nd3$ and $vd3$ are the refractive index under d light and the Abbe number under d light of the third lens L3, respectively; $nd6$ and $vd6$ are the refractive index under d light and the Abbe number under d light of the sixth lens L6, respectively;

$f/EPD=1.65$, where $f$ is the effective focal length of the camera lens group, and $EPD$ is the entrance pupil diameter of the camera lens group;

$FOV/CRA=3.6$, where $FOV$ is the angle of field of view of the camera lens group, and $CRA$ is the incident angle of the chief ray on the imaging plane S17 of the camera lens group.

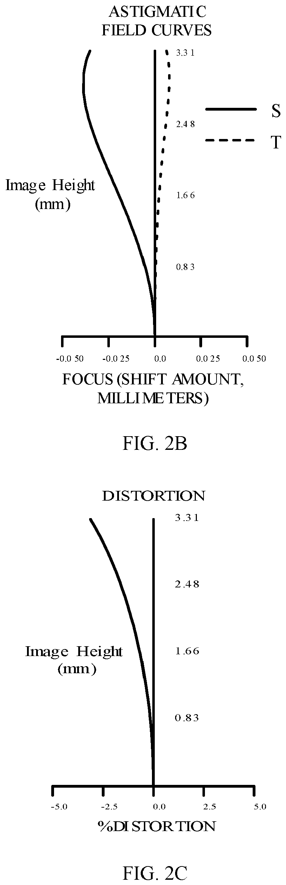

FIG. 2A shows the longitudinal spherical aberration curves of the camera lens group of Example 1, which respectively represent the focus point deviation of light with wavelengths of 500 nm, 546.07 nm, 587.56 nm, 656.27 nm, 750 nm, 850 nm, and 950 nm after being transmitted through the camera lens group. FIG. 2B shows the astigmatic curves of the camera lens group of Example 1, which represents the curvature of the meridional image surface and the curvature of the sagittal image surface. FIG. 2C shows the distortion curve of the camera lens group of Example 1, which represents the distortion rate in the cases of different image height. It can be seen from FIGS. 2A to 2C that the camera lens group according to Example 1 can achieve good imaging quality.

Example 2

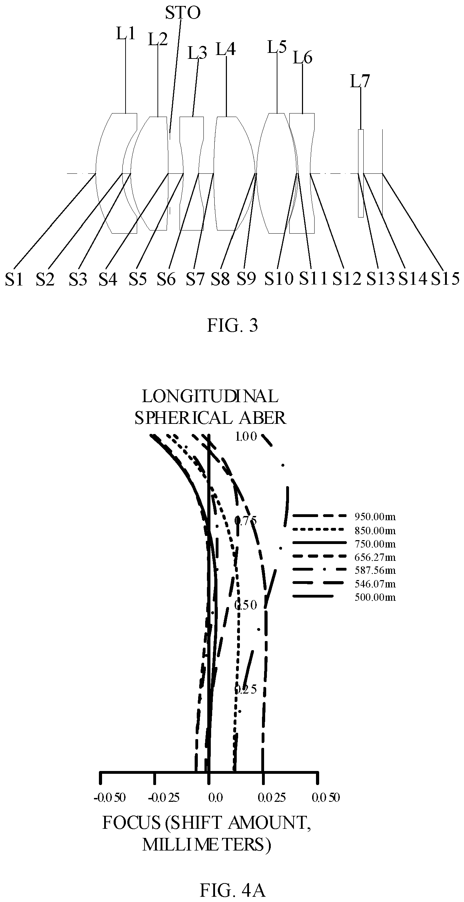

A camera lens group according to Example 2 of the present application will be described below with reference to FIGS. 3 to 4C. In this example, descriptions similar to those in Example 1 will be omitted for the sake of brevity. FIG. 3 shows a schematic view of the camera lens group according to Example 2 of the present application.

As shown in FIG. 3, the camera lens group includes a first lens L1, a second lens L2, a third lens L3, a fourth lens L4, a fifth lens L5, a sixth lens L6, and an imaging plane S15 successively in order from an object side to an image side along an optical axis.

The first lens L1 has a negative refractive power, and an object side surface S1 and an image side surface S2 of the first lens L1 are both spherical. The object side surface S1 is convex, and the image side surface S2 is concave.

The second lens L2 has a positive refractive power, and an object side surface S3 and an image side surface S4 of the second lens L2 are both spherical. The object side surface S3 is convex, and the image side surface S4 is convex.

The third lens L3 has a negative refractive power, and an object side surface S5 and an image side surface S6 of the third lens L3 are both spherical. The object side surface S5 is concave, and the image side surface S6 is concave.

The fourth lens L4 has a positive refractive power, and an object side surface S7 and an image side surface S8 of the fourth lens L4 are both aspherical. The object side surface S7 is convex, and the image side surface S8 is convex.

The fifth lens L5 has a positive refractive power, and an object side surface S9 and an image side surface S10 of the fifth lens L5 are spherical. The object side surface S9 is convex, and the image side surface S10 is convex.

The sixth lens L6 has a negative refractive power, and an object side surface S11 and an image side surface S12 of the sixth lens L6 are both spherical. The object side surface S11 is concave, and the image side surface S12 is concave.

Both the object side surface S7 and the image side surface S8 of the fourth lens L4 are arranged to be aspherical, which is beneficial to solve the problem of distortion of the field of view, and also enables the lens to achieve an excellent optical imaging effect when the lens is small, thin and flat. Furthermore, the camera lens group has a miniaturization characteristic.

The first lens L1 to the sixth lens L6 are all made of glass. The use of the lenses made of glass can cause the camera lens group to have a good temperature resistance characteristic and excellent optical performance.

The image side surface S4 of the second lens L2 is coated with a band-pass filter film, which is used to select the spectral range of the light incident on the imaging plane S 15 of the camera lens group, so as to cut off the wavelength bands other than the visible light band and the near-infrared band, such that it can ensures that the camera lens group can capture clear and vivid images during the day and night. A stop STO is further arranged between the second lens L2 and the third lens L3, so as to further improve the imaging quality of the imaging lens group.

The camera lens group further includes a protective glass L7 having an object side surface S13 and an image side surface S14. The protective glass L8 are arranged between the sixth lens L6 and the imaging plane S17. The light from an object OBJ is sequentially transmitted through the respective surfaces S1 to S14 and is finally imaged on the imaging plane S15. The photosensitive glass L7 may be a part of the camera lens group and be assembled with the lenses, or may be mounted when the camera lens group and the photosensitive element are assembled.

Table 3 shows the surface type, curvature radius, thickness, material, refractive index, Abbe number (i.e., dispersion coefficient), and effective focal length of each lens of the camera lens group according to Example 2. The unit of the curvature radius, thickness, effective focal length of each lens is millimeter (mm). In addition, the reference wavelength in Table 3 is 750 nm. Table 4 shows the higher order coefficients that can be used for the aspherical surfaces S7-S8 of the lens in Example 2, where the aspherical surface shape can be defined by the Expression (1). Table 5 shows relevant parameter values of the camera lens group given in Example 2.

Table 3

| Example 2 | | | | | | | | |
|---|---|---|---|---|---|---|---|---|
| f=10.36mm; FNO=1.65; FOV=36.0°; TTL=21.50mm | | | | | | | | |
| Surface Number | Surface Name | Surface Shape | Y radius | Thickness | Material | Refractive index | Abbe number | Focal Length |
| OBJ | Object Plane | Spherical | Infinite | Infinite | | | | |
| S1 | First Lens | Spherical | 8.83 | 2.00 | Glass | 1.921 | 24.0 | -20.51 |
| S2 | | Spherical | 5.33 | 0.63 | | | | |
| S3 | Second Lens | Spherical | 6.98 | 2.82 | Glass | 2.001 | 29.1 | 6.62 |
| S4 | | Spherical | -75.00 | 0.12 | | | | |
| STO | Stop | Spherical | Infinite | 1.02 | | | | |
| S5 | Third Lens | Spherical | -10.36 | 1.15 | Glass | 2.003 | 19.3 | -4.87 |
| S6 | | Spherical | 9.24 | 1.12 | | | | |
| S7 | Fourth Lens | Aspherical | 44.50 | 3.07 | Glass | 1.882 | 37.2 | 7.36 |
| S8 | | Aspherical | -7.23 | 0.12 | | | | |
| S9 | Fifth Lens | Spherical | 11.37 | 3.00 | Glass | 2.001 | 29.1 | 6.20 |
| S10 | | Spherical | -11.37 | 0.12 | | | | |

(continued)

| Example 2 | | | | | | | | |
|---|---|---|---|---|---|---|---|---|
| f=10.36mm; FNO=1.65; FOV=36.0°; TTL=21.50mm | | | | | | | | |
| Surface Number | Surface Name | Surface Shape | Y radius | Thickness | Material | Refractive index | Abbe number | Focal Length |
| S11 | Sixth Lens | Spherical | -9.89 | 0.90 | Glass | 2.003 | 19.3 | -6.31 |
| S12 | | Spherical | 17.01 | 3.60 | | | | |
| S13 | Protective Glass | Spherical | Infinite | 0.40 | Glass | 1.523 | 54.5 | |
| S14 | | Spherical | Infinite | 1.43 | | | | |
| S15 | Imaging Plane | Spherical | Infinite | | | | | |

Table 4

| Example 2 | | |
|---|---|---|
| Aspherical Coefficient | | |
| Surface Number | S7 | S8 |
| K | 0.00E+00 | -3.26E-01 |
| A4 | 1.92E-04 | -6.57E-05 |
| A6 | 0.00E+00 | -1.19E-05 |
| A8 | 0.00E+00 | 4.67E-07 |
| A10 | 0.00E+00 | -1.65E-08 |
| A12 | 0.00E+00 | 0.00E+00 |
| A14 | 0.00E+00 | 0.00E+00 |
| A16 | 0.00E+00 | 0.00E+00 |
| A18 | 0.00E+00 | 0.00E+00 |
| A20 | 0.00E+00 | 0.00E+00 |

Table 5

| | | | |
|---|---|---|---|
| $f(mm)$ | 10.36 | $|dn/dt|_3$ | 7.2 |
| $FOV(°)$ | 36 | $|dn/dt|_1 \times f_1$ | -49.218 |
| $ImgH(mm)$ | 3.31 | $|dn/dt|_2 \times f_2$ | 29.132 |
| $TTL(mm)$ | 21.5 | $|dn/dt|_3 \times f_3$ | -35.074 |
| $f/EPD$ | 1.65 | $|dn/dt|_4 \times f_4$ | 75.855 |
| $ns3 - ns1 \times 100$ | 7.2 | $|dn/dt|_5 \times f_5$ | 27.261 |
| $f1/f$ | -1.98 | $|dn/dt|_6 \times f_6$ | -45.446 |
| $f4/f$ | 0.71 | $nd3$ | 2.003 |
| $f6/f$ | -0.61 | $nd6$ | 2.003 |
| $ImgH* 2/TTL$ | 0.31 | $vd3$ | 19.3 |
| $\Sigma CT/TTL$ | 0.60 | $vd6$ | 19.3 |
| $Ed45/d45$ | 14.5 | $FOV/CRA$ | 3.27 |

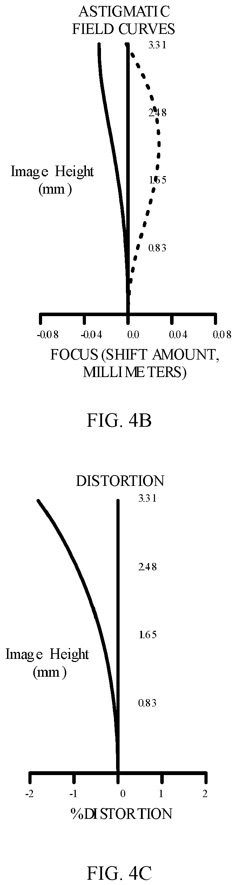

FIG. 4A shows the longitudinal spherical aberration curves of the camera lens group of Example 2, which respectively represent the focus point deviation of light with different wavelengths after being transmitted through the camera lens group. FIG. 4B shows the astigmatic curves of the camera lens group of Example 2, which represents the curvature of the meridional image surface and the curvature of the sagittal image surface. FIG. 4C shows the distortion curve of the camera lens group of Example 2, which represents the distortion rate in the cases of different image height. It can be seen from FIGS. 4A to 4C that the camera lens group according to Example 2 can achieve good imaging quality.

Example 3

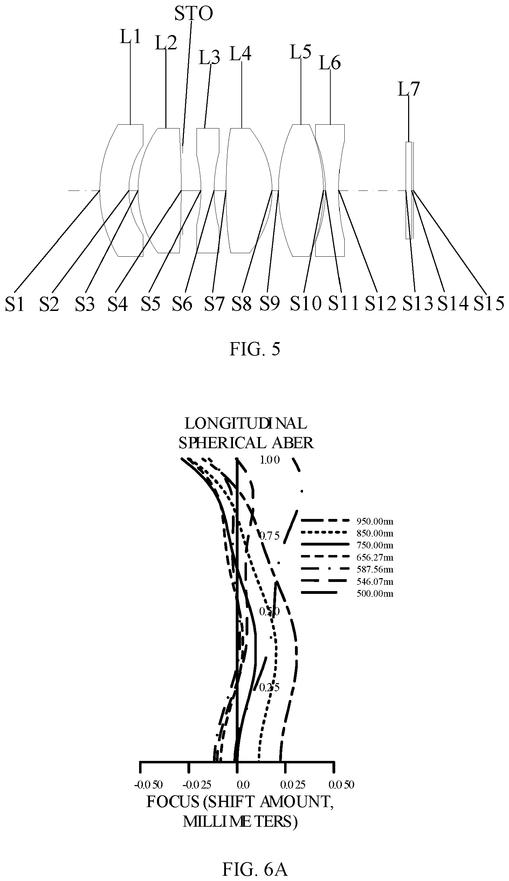

A camera lens group according to Example 3 of the present application will be described below with reference to FIGS. 5 to 6C. In this example, descriptions similar to those in Example 1 will be omitted for the sake of brevity. FIG. 5 shows a schematic view of the camera lens group according to Example 3 of the present application.

As shown in FIG. 5, the camera lens group includes a first lens L1, a second lens L2, a third lens L3, a fourth lens L4, a fifth lens L5, a sixth lens L6, and an imaging plane S15 successively in order from an object side to an image side along an optical axis.

The first lens L1 has a negative refractive power, and an object side surface S1 and an image side surface S2 of the first lens L1 are both spherical. The object side surface S1 is convex, and the image side surface S2 is concave.

The second lens L2 has a positive refractive power, and an object side surface S3 and an image side surface S4 of the second lens L2 are both spherical. The object side surface S3 is convex, and the image side surface S4 is convex.

The third lens L3 has a negative refractive power, and an object side surface S5 and an image side surface S6 of the third lens L3 are both spherical. The object side surface S5 is concave, and the image side surface S6 is concave.

The fourth lens L4 has a positive refractive power, and an object side surface S7 and an image side surface S8 of the fourth lens L4 are both aspherical. The object side surface S7 is convex, and the image side surface S8 is convex.

The fifth lens L5 has a positive refractive power, and an object side surface S9 and an image side surface S10 of the fifth lens L5 are spherical. The object side surface S9 is convex, and the image side surface S10 is convex.

The sixth lens L6 has a negative refractive power, and an object side surface S11 and an image side surface S12 of the sixth lens L6 are both spherical. The object side surface S11 is concave, and the image side surface S12 is concave.

Both the object side surface S7 and the image side surface S8 of the fourth lens L4 are arranged to be aspherical, which is beneficial to solve the problem of distortion of the field of view, and also enables the lens to achieve an excellent optical imaging effect when the lens is small, thin and flat. Furthermore, the camera lens group has a miniaturization characteristic.

The first lens L1 to the sixth lens L6 are all made of glass. The use of the lenses made of glass can cause the camera lens group to have a good temperature resistance characteristic and excellent optical performance.

The image side surface S4 of the second lens L2 is coated with a band-pass filter film, which is used to select the spectral range of the light incident on the imaging plane S15 of the camera lens group, so as to cut off the wavelength bands other than the visible light band and the near-infrared band, such that it can ensures that the camera lens group can capture clear and vivid images during the day and night. A stop STO is further arranged between the second lens L2 and the third lens L3, so as to further improve the imaging quality of the imaging lens group.

The camera lens group further includes a protective glass L7 having an object side surface S13 and an image side surface S14. The protective glass L7 are arranged between the sixth lens L6 and the imaging plane S17. The light from an object OBJ is sequentially transmitted through the respective surfaces S1 to S14 and is finally imaged on the imaging plane S15. The photosensitive glass L7 may be a part of the camera lens group and be assembled with the lenses, or may be mounted when the camera lens group and the photosensitive element are assembled.

Table 6 shows the surface type, curvature radius, thickness, material, refractive index, Abbe number (i.e., dispersion coefficient), and effective focal length of each lens of the camera lens group according to Example 2. The unit of the curvature radius, thickness, effective focal length of each lens is millimeter (mm). In addition, the reference wavelength in Table 6 is 750 nm. Table 7 shows the higher order coefficients that can be used for the aspherical surfaces S7-S8 of the lens in Example 3, where the aspherical surface shape can be defined by the Expression (1). Table 8 shows relevant parameter values of the camera lens group given in Example 3.

Table 6

| Surface Number | Surface Name | Surface Shape | Y radius | Thickness | Material | Refractive index | Abbe number | Focal Length |
|---|---|---|---|---|---|---|---|---|
| | Example 3 |
| | f=10.30mm; FNO=1.65; FOV=36.0°; TTL=21.50mm |
| OBJ | Object Plane | Spherical | Infinite | Infinite | | | | |
| S1 | First Lens | Spherical | 8.66 | 2.00 | Glass | 1.921 | 24.0 | -20.79 |
| S2 | | Spherical | 5.27 | 0.63 | | | | |
| S3 | Second Lens | Spherical | 7.32 | 2.94 | Glass | 2.001 | 29.1 | 6.91 |
| S4 | | Spherical | -75.00 | 0.10 | | | | |
| STO | Stop | Spherical | Infinite | 1.26 | | | | |
| S5 | Third Lens | Spherical | -9.78 | 0.90 | Glass | 2.003 | 19.3 | -4.91 |
| S6 | | Spherical | 9.78 | 0.82 | | | | |
| S7 | Fourth Lens | Aspherical | 42.01 | 3.16 | Glass | 1.804 | 40.6 | 7.39 |
| S8 | | Aspherical | -6.58 | 0.44 | | | | |
| S9 | Fifth Lens | Spherical | 10.92 | 3.09 | Glass | 2.001 | 29.1 | 5.98 |
| S10 | | Spherical | -10.92 | 0.13 | | | | |
| S11 | Sixth Lens | Spherical | -9.44 | 0.90 | Glass | 1.923 | 20.9 | -6.34 |
| S12 | | Spherical | 15.00 | 4.60 | | | | |
| S13 | Protective Glass | Spherical | Infinite | 0.40 | Glass | 1.523 | 54.5 | |
| S14 | | Spherical | Infinite | 0.12 | | | | |
| S15 | Imaging Plane | Spherical | Infinite | | | | | |

Table 7

| | Example 3 |
|---|---|---|
| | Aspherical Coefficient |
| Surface Number | S7 | S8 |
| K | 0.00E+00 | -3.13E-01 |
| A4 | 3.38E-04 | 9.62E-05 |
| A6 | 0.00E+00 | -9.67E-05 |
| A8 | 0.00E+00 | 2.51E-05 |
| A10 | 0.00E+00 | -3.90E-06 |
| A12 | 0.00E+00 | 3.36E-07 |
| A14 | 0.00E+00 | -1.52E-08 |
| A16 | 0.00E+00 | 2.81E-10 |
| A18 | 0.00E+00 | 0.00E+00 |
| A20 | 0.00E+00 | 0.00E+00 |

Table 8

| | | | |
|---|---|---|---|
| $f(mm)$ | 10.30 | $|dn/dt|_3$ | 7.2 |
| $FOV(°)$ | 36 | $|dn/dt|_1 \times f_1$ | -49.903 |
| $ImgH(mm)$ | 3.31 | $|dn/dt|_2 \times f_2$ | 30.411 |
| $TTL(mm)$ | 21.5 | $|dn/dt|_3 \times f_3$ | -35.316 |
| $f/EPD$ | 1.65 | $|dn/dt|_4 \times f_4$ | 62.783 |
| $|ns3\text{-}ns1| \times 100$ | 7.2 | $|dn/dt|_5 \times f_5$ | 26.325 |
| $f1/f$ | -2.02 | $|dn/dt|_6 \times f_6$ | -11.404 |
| $f4/f$ | 0.72 | $nd3$ | 2.003 |
| $f6/f$ | -0.62 | $nd6$ | 1.923 |
| $ImgH*2/TTL$ | 0.31 | $vd3$ | 19.3 |
| $\Sigma CT/TTL$ | 0.60 | $vd6$ | 20.9 |
| $Ed45/d45$ | 4.98 | $FOV/CRA$ | 3.27 |

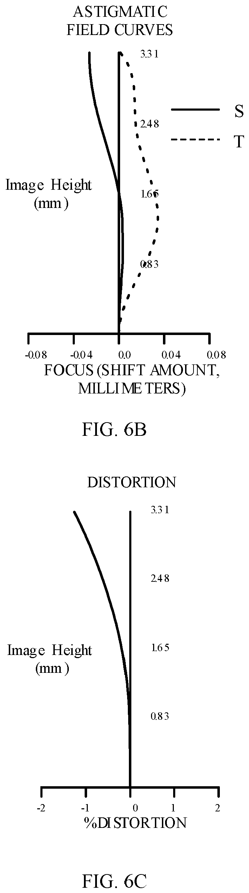

FIG. 6A shows the longitudinal spherical aberration curves of the camera lens group of Example 3, which respectively represent the focus point deviation of light with different wavelengths after being transmitted through the camera lens group. FIG. 6B shows the astigmatic curves of the camera lens group of Example 3, which represents the curvature of the meridional image surface and the curvature of the sagittal image surface. FIG. 6C shows the distortion curve of the camera lens group of Example 3, which represents the distortion rate in the cases of different image height. It can be seen from FIGS. 6A to 6C that the camera lens group according to Example 3 can achieve good imaging quality.

The present application provides an image acquisition module including the camera lens group as described above and a photosensitive element. The photosensitive element is arranged on the image side of the camera lens group, to receive the light carrying image information formed by the optical system. Specifically, the photosensitive element may adopt a complementary metal oxide semiconductor (CMOS) image sensor or a charge-coupled device (CCD) image sensor.

The above-mentioned image acquisition module can capture clear images even under dark light conditions by using the aforementioned camera lens group, and also has the characteristics of miniaturization and lightweight, which is beneficial to be adapted to devices with limited size, such as mobile phones, tablets and in-vehicle lenses.

The present application further provides an electronic device including a housing and the image acquisition module as described above. The image acquisition module is mounted on the housing for acquire images.

Specifically, the image acquisition device is arranged in the housing and exposed from the housing to acquire images. The housing can protect the image acquisition device from dust, water, and drop. The housing is provided with a hole corresponding to the image acquisition device, such that the light can pass into or out of the housing through the hole.

The above electronic device can capture clear images even under dark light conditions, such that the driver's status information, passengers and interior conditions can be accurately fed back to the in-vehicle assistance system in time, such that the system can make accurate analysis and determination, to ensure the safety of the vehicle.

The "electronic device" used in some other embodiments may include, but is not limited to, a device configured to be connected via a wired line connection and/or receive/transmit communication signals via a wireless interface. The electronic device configured to communicate via the wireless interface may be referred to as a "wireless communication terminal", a "wireless terminal" or a "mobile terminal". Examples of the mobile terminal include, but is not limited to satellite or cellular phones; personal communication system (PCS) terminals that can combine cellular radio phones with data processing, fax, and data communication capabilities. Examples of the mobile terminal can include a radio phone, a pager, an Internet/intranet access, a Web browser, a memo pad, a calendar, and/or a personal digital assistant (PDA) of the global positioning system (GPS) receiver; and conventional laptop and/or handheld receiver or other electronic device including a radio phone transceiver.

The technical features of the above-mentioned embodiments can be combined arbitrarily. In order to simply the description, all possible combinations of the technical features in the above-mentioned embodiments are not described. However, as long as there is no contradiction in the combinations of these technical features, they should be considered to be fallen into the range described in the present specification.

Only several embodiments of the present application are illustrated in the above-mentioned embodiments, and the description thereof is relatively specific and detailed, but it should not be understood as a limitation on the scope of the present application. It should be noted that for those of ordinary skill in the art, without departing from the concept of the present application, several modifications and improvements can be made, which all fall within the protection scope of the present application. Therefore, the protection scope of the present application shall be subject to the appended claims.

**Claims**

1. A camera lens group configured to image light comprising a visible light band and an infrared band, the camera lens group comprising, successively in order from an object side to an image side along an optical axis:

   a first lens having a negative refractive power, an object side surface of the first lens being convex;
   a second lens having a positive refractive power;
   a third lens having a negative refractive power;
   a fourth lens having a refractive power;
   a fifth lens having a refractive power, an object side surface and an image side surface of the fifth lens being convex;
   a sixth lens having a negative refractive power, an image side surface of the sixth lens being concave; and
   a stop arranged between the object side of the camera lens group and the sixth lens;
   wherein the camera lens group satisfies the following condition:

   $$0 < |ns3 - ns1| \times 100 < 30 ;$$

   wherein $ns3$ indicates a s-light refractive index of the third lens, $ns1$ indicates a s-light refractive index of the first lens.

2. The camera lens group according to claim 1, wherein an object side surface and/or an image side surface of at least one of the second lens, the third lens, the fourth lens, the fifth lens, and the sixth lens is aspherical.

3. The camera lens group according to claim 1, wherein a filter film is arranged on an object side surface or an image side surface of one of the first lens, the second lens, the third lens, the fourth lens, the fifth lens and the sixth lens; or a filter is arranged between the sixth lens and an imaging plane of the camera lens group.

4. The camera lens group according to claim 1, further satisfying the following condition:

   $$-5 < f1/f < 0;$$

   wherein $f1$ is an effective focal length of the first lens, and $f$ is an effective focal length of the camera lens group.

5. The camera lens group according to claim 1, further satisfying the following condition:

   $$0 < f4/f < 4;$$

   wherein $f4$ is an effective focal length of the fourth lens, and $f$ is an effective focal length of the camera lens group.

6. The camera lens group according to claim 1, further satisfying the following condition:

   $$-3 < f6/f < 0;$$

   wherein $f6$ is an effective focal length of the sixth lens, and $f$ is an effective focal length of the camera lens group.

7. The camera lens group according to claim 1, further satisfying the following condition:

$$0.1 < ImgH*2/TTL < 0.8;$$

wherein *ImgH* is half of a diagonal length of an effective pixel area on an imaging plane of the camera lens group, and *TTL* is a distance on the optical axis from the object side surface of the first lens to the imaging plane of the camera lens group.

8. The camera lens group according to claim 1, further satisfying the following condition:

$$0.5 < \Sigma CT/TTL < 0.85;$$

wherein *ΣCT* is a sum of thicknesses of the first lens to the sixth lens on the optical axis, and *TTL* is a distance on the optical axis from the object side surface of the first lens to an imaging plane of the camera lens group

9. The camera lens group according to claim 1, further satisfying the following condition:

$$Ed45/d45 < 20;$$

wherein *Ed45* is a distance from a portion of an image side surface of the fourth lens at a maximum effective diameter to a portion of the object side surface of the fifth lens at a maximum effective diameter in a direction parallel to the optical axis; *d45* is a distance on the optical axis from the image side surface of the fourth lens to the object side surface of the fifth lens.

10. The camera lens group according to claim 1, further satisfying the following condition:

$$\left| dn/dt \right|_3 < 10.3 \times 10^{-6} /^{\circ}\text{C};$$

wherein $|dn/dt|_3$ is a magnitude of a temperature coefficient of refractive index of the third lens in a temperature range of -40°C to 100°C.

11. The camera lens group according to claim 1, wherein at least one lens in the camera lens group satisfies the following condition:

$$\left| dn/dt \right|_i \times f_i < 0;$$

wherein *i* is a serial number of the lens in the camera lens group; $|dn/dt|_i$ is a magnitude of a temperature coefficient of refractive index of the $i^{th}$ lens in the camera lens group in a temperature range of -40°C to 100°C; and $f_i$ is an effective focal length of the $i^{th}$ lens in the camera lens group.

12. The camera lens group according to claim 1, further satisfying the following condition:

$$nd3 > 1.9, nd6 > 1.9;$$

$$vd3 < 30, vd6 < 30;$$

wherein *nd3* and *vd3* are a refractive index under d light and an Abbe number under d light of the third lens, respectively; *nd6* and *vd6* are a refractive index under d light and an Abbe number under d light of the sixth lens, respectively.

13. The camera lens group according to claim 1, further satisfying the following condition:

$$f/EPD \leq 2.0;$$

wherein *f* is an effective focal length of the camera lens group, and *EPD* is an entrance pupil diameter of the camera lens group.

14. The camera lens group according to claim 1, further satisfying the following condition:

$$1 < FOV/CRA < 10;$$

wherein *FOV* is an angle of field of view of the camera lens group, and *CRA* is an incident angle of a chief ray to the camera lens group.

15. An image acquisition module, comprising:

the camera lens group according to any one of claims 1 to 14; and
a photosensitive element arranged on the image side of the camera lens group.

16. An electronic device, comprising:

a housing; and
the image acquisition module according to claim 15 mounted on the housing.

FIG. 1

FIG. 2A

ASTIGMATIC
FIELD CURVES

Image Height
(mm)

3.3 1

2.4 8

1.6 6

0.8 3

——————— S

- - - - - - - T

-0.0 50    -0.0 25    0.0    0.0 25    0.0 50

FOCUS (SHIFT AMOUNT,
MILLIMETERS)

FIG. 2B

DISTORTION

Image Height
(mm)

3.3 1

2.4 8

1.66

0.83

-5.0    -2.5    0.0    2.5    5.0

%DISTORTION

FIG. 2C

FIG. 3

LONGITUDINAL
SPHERICAL ABER

950.00nm
850.00nm
750.00nm
656.27nm
587.56nm
546.07nm
500.00nm

FOCUS (SHIFT AMOUNT,
MILLIMETERS)

FIG. 4A

ASTIGMATIC
FIELD CURVES

3.31

2.48

Image Height
(mm)

1.65

0.83

-0.08   -0.04   0.0   0.04   0.08

FOCUS (SHIFT AMOUNT,
MILLIMETERS)

FIG. 4B

DISTORTION

3.31

2.48

1.65

Image Height
(mm)

0.83

-2   -1   0   1   2

%DISTORTION

FIG. 4C

FIG. 5

FIG. 6A

ASTIGMATIC
FIELD CURVES

FIG. 6B

DISTORTION

FIG. 6C

## INTERNATIONAL SEARCH REPORT

| International application No. |
|---|
| **PCT/CN2019/121296** |

| **A.** | **CLASSIFICATION OF SUBJECT MATTER** |
|---|---|

G02B 13/00(2006.01)i; G02B 13/14(2006.01)i; G02B 13/18(2006.01)i

According to International Patent Classification (IPC) or to both national classification and IPC

| **B.** | **FIELDS SEARCHED** |
|---|---|

Minimum documentation searched (classification system followed by classification symbols)

G02B 13/-

Documentation searched other than minimum documentation to the extent that such documents are included in the fields searched

Electronic data base consulted during the international search (name of data base and, where practicable, search terms used)

CNKI, CNPAT, WPI, EPODOC: 天津欧菲光电有限公司, 车, 摄像, 成像, 相机, 透镜, 镜头, 红外, 近红外, 折射率, 负, 正, 第三, 第3, L3, 第6, 第六, L6, imag+, lens+, vehicle, car, camera, refractive, index, positive, negative, six, third, sixth

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 201302618 Y (FUJINON CORPORATION) 02 September 2009 (2009-09-02) description page 5 paragraph 4 from the bottom - page 12 paragraph 4, page 19 paragraph 1- page 21 paragraph 4, figures 2, 8 | 1-16 |
| X | CN 109324397 A (NINGBO SUNNY AUTOMOTIVE OPTICAL TECHNOLOGY CO., LTD.) 12 February 2019 (2019-02-12) description, paragraphs [0034]-[0125], and figures 1-3 | 1-16 |
| A | CN 110501799 A (NINGBO SUNNY AUTOMOTIVE OPTICAL TECHNOLOGY CO., LTD.) 26 November 2019 (2019-11-26) entire document | 1-16 |
| A | CN 201444211 U (FUJINON CORPORATION) 28 April 2010 (2010-04-28) entire document | 1-16 |
| A | CN 109752821 A (GUANGDONG HONGJING OPTOELECTRONIC TECHNOLOGY INC.) 14 May 2019 (2019-05-14) entire document | 1-16 |
| A | US 2015177493 A1 (FUJIFILM CORP.) 25 June 2015 (2015-06-25) entire document | 1-16 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 August 2020** | **26 August 2020** |

| Name and mailing address of the ISA/CN | Authorized officer |
|---|---|
| **China National Intellectual Property Administration (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT
### Information on patent family members

| International application No. |
| --- |
| **PCT/CN2019/121296** |

| Patent document cited in search report | | | Publication date (day/month/year) | Patent family member(s) | | | Publication date (day/month/year) |
| --- | --- | --- | --- | --- | --- | --- | --- |
| CN | 201302618 | Y | 02 September 2009 | US | 8054562 | B2 | 08 November 2011 |
| | | | | JP | 5393276 | B2 | 22 January 2014 |
| | | | | TW | M356115 | U | 01 May 2009 |
| | | | | JP | 2010072622 | A | 02 April 2010 |
| | | | | US | 2010046094 | A1 | 25 February 2010 |
| CN | 109324397 | A | 12 February 2019 | None | | | |
| CN | 110501799 | A | 26 November 2019 | None | | | |
| CN | 201444211 | U | 28 April 2010 | TW | M358326 | U | 01 June 2009 |
| | | | | JP | 2010107531 | A | 13 May 2010 |
| | | | | US | 2010103538 | A1 | 29 April 2010 |
| | | | | JP | 5345823 | B2 | 20 November 2013 |
| | | | | US | 8040618 | B2 | 18 October 2011 |
| CN | 109752821 | A | 14 May 2019 | None | | | |
| US | 2015177493 | A1 | 25 June 2015 | US | 9664882 | B2 | 30 May 2017 |
| | | | | US | 9405101 | B2 | 02 August 2016 |
| | | | | US | 2016299321 | A1 | 13 October 2016 |
| | | | | JP | 2015125149 | A | 06 July 2015 |
| | | | | JP | 6208003 | B2 | 04 October 2017 |

Form PCT/ISA/210 (patent family annex) (January 2015)